# EUROPÄISCHE PATENTSCHRIFT

(11) **EP 2 475 853 B1**
(45) Veröffentlichungstag und Bekanntmachung des Hinweises auf die Patenterteilung: **19.11.2014**
(21) Anmeldenummer: 10754298.7
(22) Anmeldetag: 03.09.2010
(51) Int. Cl.: F01N 13/16, F01N 3/20

(54) **FÖRDERVORRICHTUNG FÜR EIN REDUKTIONSMITTEL**
FEEDING DEVICE FOR A REDUCING AGENT
DISPOSITIF D'ACHEMINEMENT POUR UN AGENT DE RÉDUCTION

(30) Priorität: 11.09.2009 DE 102009041179
(43) Veröffentlichungstag der Anmeldung: 18.07.2012
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53840 Troisdorf (DE); SCHEPERS, Sven, 53844 Troisdorf (DE)
(74) Vertreter: Rössler, Matthias
(86) Internationale Anmeldenummer: PCT/EP2010/062943
(87) Internationale Veröffentlichungsnummer: WO 2011/029780

(56) Entgegenhaltungen:
- WO-A1-03/016687
- WO-A1-2007/017080
- WO-A1-2007/126366
- DE-A1-102004 051 746

## Beschreibung

Gegenstand der vorliegenden Erfindung ist eine Vorrichtung zur Förderung von flüssigem Reduktionsmittel und/oder Reduktionsmittelvorläufer aus einer Tankanordnung.

Das Abgas von Verbrennungskraftmaschinen weist Stoffe auf, deren Emissionen in die Umwelt unerwünscht sind. Beispielsweise dürfen in vielen Ländern Stickstoffoxidverbindungen (NOₓ) nur bis zu einem gewissen Grenzwert im Abgas von Verbrennungskraftmaschinen enthalten sein. Neben innermotorischen Maßnahmen, mit denen durch Wahl eines möglichst geeigneten Betriebspunktes der Verbrennungskraftmaschine die Emission von Stickstoffoxidverbindungen vermindert werden können, haben sich Nachbehandlungsmethoden etabliert, mit denen eine weitere Absenkung der Stickoxidemissionen möglich ist.

Eine Möglichkeit, die Stickstoffoxidemissionen weiter zur reduzieren, ist die sogenannte selektive katalytische Reduktion (SCR: "selective catalytic reduction"). Hierbei erfolgt eine selektive Reduktion der Stickoxide zu molekularem Stickstoff (N₂) unter Einsatz eines Reduktionsmittels. Ein mögliches Reduktionsmittel ist Ammoniak (NH₃). Ammoniak wird dabei oft nicht in Form von Ammoniak gelagert, vielmehr wird ein Ammoniakvorläufer bevorratet, der im Bedarfsfall in Ammoniak umgesetzt wird. Man spricht von einem Reduktionsmittelvorläufer. Ein wichtiger möglicher Reduktionsmittelvorläufer, der in Kraftfahrzeugen eingesetzt werden kann, ist Harnstoff ((NH₂)₂CO). Bevorzugt wird Harnstoff in Form einer Harnstoff-Wasser-Lösung bevorratet. Harnstoff und insbesondere Harnstoff-Wasser-Lösung ist gesundheitlich unbedenklich, einfach zu verteilen und zu lagern. Unter dem Handelsnahmen "AdBlue" wird eine solche Harnstoff-Wasser-Lösung mit einem Harnstoffgehalt von 32,5 % vertrieben.

Eine Harnstoff-Wasser-Lösung wird für gewöhnlich in einem Tanksystem im Kraftfahrzeug mitgeführt und mit einem Einspritzsystem mit Pumpe und Injektor in das Abgassystem portioniert zudosiert. Der Verbrauch an Harnstoff zur Reduktion unerwünschter Stickstoffoxidverbindungen im Abgas liegt bei bis zu 10 % des Kraftstoffverbrauches des betroffenen Kraftfahrzeuges. Zur portionierten Zudosierung von Reduktionsmittel ist es erforderlich, dass das Reduktionsmittel unter einem definierten Druck einem Injektor zur Verfügung gestellt wird. Problematisch bei der Bereitstellung von Reduktionsmittel unter einem definierten Druck ist, dass eine Harnstoff-Wasser-Lösung bei niedrigen Temperaturen regelmäßig einfriert. Eine Harnstoff-Wasser-Lösung mit einem Harnstoffgehalt von 32,5 % friert beispielweise bei Temperaturen von ca. -11 °C ein. Eingefrorener flüssiger Harnstoff ist von einer Pumpe regelmäßig nicht zu fördern. Gleichzeitig kann aufgrund des Eisdruckes, welcher beim Einfrieren entsteht, eine Pumpenvorrichtung leicht zerstört werden. Es ist wichtig, dass eine Pumpenvorrichtung für Harnstoff auch bei niedrigen Außentemperaturen schnell betriebsbereit ist, da regelmäßig zu Beginn einer Fahrt mit einem Kraftfahrzeug besonders große Mengen an schädlichen Emissionen freigesetzt werden. Außerdem sollte ein Einspritzsystem durch das Einfrieren des in ihm enthaltenen Reduktionsmittelvorläufers nicht geschädigt werden.

Aus der WO-A1-2007/017080 ist ein Heizsystem für ein Flüssigkeitsfördersystem, insbesondere für ein Harnstoff-Versorgungssystem eines Abgasreinigungskatalysators einer Verbrennungskraftmaschine, bekannt. Dieses Heizsystem umfasst mindestens eine Heizung zum Auftauen der Flüssigkeit und mindestens eine Filterheizung zum Beheizen eines Filters zum Filtern der Flüssigkeit. Der Filter und die Filterheizung sind in einem durch Spritzgießen gefertigten Filterbecher aus Kunststoff angeordnet.

Ausgehend von diesem Stand der Technik ist es Aufgabe der hier vorliegenden Erfindung, die im Zusammenhang mit dem Stand der Technik geschilderten technischen Probleme zu lindern. Es soll insbesondere eine besonders kostengünstige, langlebige und auch bei niedrigen Temperaturen schnell reaktivierbare Fördervorrichtung für ein Reduktionsmittel vorgestellt werden.

Diese Aufgaben werden gelöst mit einer Fördervorrichtung gemäß den Merkmalen des Patentanspruches 1. Auch wird eine Tankanordnung aufweisend eine erfindungsgemäße Fördervorrichtung sowie ein Verfahren zum Beheizen einer erfindungsgemäßen Fördervorrichtung und ein Kraftfahrzeug aufweisend eine erfindungsgemäße Fördervorrichtung angegeben. Weitere vorteilhafte Ausgestaltungen der Fördervorrichtungen und der Tankanordnung sind in den jeweils abhängig formulierten Patentansprüchen angegeben. Die in den Patentansprüchen einzeln aufgeführten Merkmale sind in beliebiger, technologisch sinnvoller Weise miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung ist eine Fördervorrichtung für ein Reduktionsmittel mit einem metallischen Gehäuse aufweisend zumindest ein außen befestigtes metallisches Ansaugrohr und einen äußeren Druckleitungsanschluss, wobei im Gehäuse eine metallische Grundplatte angeordnet ist, an der zumindest eine Pumpe und Kanäle vorgesehen sind, wobei das Ansaugrohr, das Gehäuse, die metallische Grundplatte und die Pumpe in wärmeleitendem Kontakt zueinander stehen und benachbart zum Ansaugrohr ein längliches Heizelement angeordnet ist.

Im Sinne der Erfindung ist unter dem Begriff Reduktionsmittel auch ein Reduktionsmittelvorläufer, wie beispielsweise eine Harnstoff-Wasser-Lösung, bevorzugt mit einem Harnstoff-Anteil von 32,5 Gewichtsprozent, zu verstehen.

Wesentlicher Grundgedanke der erfindungsgemäßen Fördervorrichtung ist, dass ein besonders leichtes Aufheizen der Vorrichtung beim Einfrieren des Reduktionsmittels in der Fördervorrichtung ermöglicht werden soll. Aus diesem Grund sind alle im Betrieb mit flüssigem Reduktionsmittel gefüllten Komponenten an einer gemeinsamen metallischen Grundplatte befestigt, über welche sie in wärmeleitendem Kontakt zueinander stehen. So kann eine effiziente Aufheizung der erfindungsgemäßen Vorrichtung über ein einziges längliches Heizelement (parallel) entlang des Ansaugrohres erfolgen.

Regelmäßig ist das Ansaugrohr einer erfindungsgemäßen Fördervorrichtung in einem Tank für Reduktionsmittel angeordnet. Dadurch, dass das Heizelement benachbart bzw. parallel zum Ansaugrohr entlang des Ansaugrohres angeordnet ist, erfolgt auch eine effiziente Aufheizung des Reduktionsmittels in einem Tank, welcher sich um das Ansaugrohr herum befindet. Zum einen kann hierdurch das dort vorhandene Reduktionsmittel schnell aufgeschmolzen und damit auch schnell und einfach angesaugt werden. Zum anderen wird eine möglicherweise im Reduktionsmitteltank entstandene Eisdecke rund um das Ansaugrohr aufgeschmolzen, so dass sich unterhalb der Eisdecke durch das Ansaugen kein Unterdruck bilden kann, welcher das Fördern von Reduktionsmittel aus dem Reduktionsmitteltank erschweren bzw. sogar verhindern würde.

Das Heizelement ist bevorzugt mit einer Klammer gegen das Ansaugrohr verspannt. Die Klammer ist aus wärmeleitendem Material, beispielsweise Aluminium. Sie ist derart ausgeführt, dass sie großflächig an einer Innenfläche des Ansaugrohres anliegt, so dass ein guter Wärmeübergang von der Klammer auf das Mantelrohr vorliegt. Das Heizelement ist beispielsweise an die Klammer angelötet oder angeschweißt, so dass auch zwischen Heizelement und Klammer ein guter Wärmeübergang vorliegt. Die Klammer ist bevorzugt als gebogenes Blech mit einem Radius im entspannten Zustand ausgeführt, der leicht größer ist als der Radius der Innenfläche des Ansaugrohres. So sitzt die Klammer unter Spannung im Ansaugrohr und muss in diesem nicht stoffschlüssig fixiert werden. Gegebenenfalls kann die Klammer Bohrungen aufweisen, um den Wärmeübergang vom Heizelement zum Ansaugrohr einzustellen.

Der Anbau der wichtigen, Reduktionsmittel beinhaltenden Komponenten, also vor allem der Pumpe und der Kanäle, an einer metallischen Grundplatte ermöglicht zudem die einfache Montage der erfindungsgemäßen Fördervorrichtung. Es ist nicht notwendig, diese Komponenten direkt im Gehäuse zu montieren, sondern sie können an der metallischen Grundplatte vormontiert werden, und dann als Baugruppe in das metallische Gehäuse eingebracht werden.

Besonders vorteilhaft ist die erfindungsgemäße Fördervorrichtung, wenn in der metallischen Grundplatte Kanäle eingebracht sind und das Ansaugrohr, die Pumpe und der Leitungsanschluss über die Kanäle in der metallischen Grundplatte fluidisch verbunden sind.

Die (einteilige) metallische Grundplatte kann beispielsweise als Fräs- und/oder Gussteil ausgeführt sein. In der metallischen Grundplatte können somit einfach Kanäle beispielsweise als Bohrungen hergestellt werden. Bei einem Gussteil können die Kanäle einfach mit Hilfe von Gusskernen hergestellt werden. Die fluidischen Verbindungen zwischen den einzelnen Komponenten der Fördervorrichtung direkt über Kanäle in der metallischen Grundplatte vorzusehen, verringert die Anzahl an notwendigen Einzelteilen und leistet somit einen Beitrag dazu, die Montage der Vorrichtung weiter zu vereinfachen und somit kostengünstiger zu gestalten. Auch ist so eine schnelle Wärmeeinbringung von der Grundplatte in die Kanäle möglich, so dass hier vorhandenes Reduktionsmittel schnell aufgelöst wird.

Die metallische Grundplatte kann mit abstehenden Tragflächen versehen sein, so dass die Montage bzw. der Austausch von Bauteilen (wie der Pumpe, Ventilen und Drucksensoren) von oben erfolgen kann, ohne dass die metallische Grundplatte aus dem metallischen Gehäuse heraus genommen werden muss.

Die metallische Grundplatte (sowie ggf. weitere/alle hier als metallisch angegebenen Komponenten) ist bevorzugt (zumindest an der Oberfläche ganz besonders bevorzugt aber massiv bzw. vollständig) aus bzw. mit Stahl hergestellt. Gegebenenfalls kann auch gleichermaßen Aluminium als Material für die metallische Grundplatte verwendet werden. Über die metallische Grundplatte kann somit besonders gut eine Wärmeleitung vom Heizelement zu den einzelnen Komponenten der Fördervorrichtung erfolgen.

Das metallische Gehäuse ist vorzugsweise mittels Tiefziehen hergestellt (Tiefzieh-Bauteil). Zum Anschluss des Ansaugrohres an das metallische Gehäuse weist das Gehäuse vorzugsweise eine abstehende Ausbördelung auf, die das Ansaugrohr an dem metallischen Gehäuse zentriert. Die Verbindung zwischen Ansaugrohr und metallischen Gehäuse sollte mittels Löten oder Laserschweißen erfolgen.

Alle metallischen Komponenten der erfindungsgemäßen Fördervorrichtung sind bevorzugt aus korrosionsbeständigem austenitischen Stahl (beispielsweise einem der Stähle mit den Werkstoffnummer 1.4301 oder 1.4828 gemäß deutschem Stahlschlüssel) oder alternativ aus korrosionsbeständigem ferritischem Stahl (beispielsweise aus dem Stahl mit der Werkstoffnummer 1.4607 gemäß deutschem Stahlschlüssel) gefertigt. Die metallischen Komponenten umfassen insbesondere die Grundplatte, ein Filtergehäuse sowie das Saugrohr und das Gehäuse der Filtervorrichtung. Die Grundplatte und/oder ein Filtergehäuse können dabei aus Stahlguss oder Aluminiumguss gefertigt sein und gegebenenfalls zusätzlich eine Beschichtung aufweisen.

Besonders vorteilhaft ist die erfindungsgemäße Vorrichtung auch, wenn mit der Grundplatte ein metallisches Filtergehäuse wärmeleitend verbunden ist, in welchem ein Filter anordnenbar ist oder angeordnet ist.

Flüssiges Reduktionsmittel beinhaltet häufig kleinere Partikel, welche zu einer Schädigung von Komponenten der Fördervorrichtung führen könnte. Besonders sensible Komponenten der Fördervorrichtung sind beispielsweise die Ventile der Pumpe oder der Injektor, mit welchem Reduktionsmittel in das Abgassystem einer Verbrennungskraftmaschine eingeführt werden kann. Aus diesem Grund ist es vorteilhaft, Reduktionsmittel zu filtern. Auch im Filter bzw. in dem den Filter umgebenden Filtergehäuse bleibt flüssiges Reduktionsmittel stehen, so dass auch hier ein Einfrieren erfolgt. Es ist also vorteilhaft, das Filtergehäuse mit an die metallische Grundplatte wärmeleitend anzubinden, so dass auch eine effiziente Aufheizung des Filtergehäuses erfolgt und eingefrorenes Reduktionsmittel im Filtergehäuse somit aufgeschmolzen wird.

Das metallische Filtergehäuse und die Grundplatte können auch ein gemeinsames Bauteil sein. Dieses Bauteil kann beispielsweise aus einem Metallblock gefräst oder gegossen sein. So kann eine besonders gute Wärmeleitung vom metallischen Filtergehäuse zur Grundplatte und umgekehrt erfolgen. Gleichzeitig ist bei einem derartigen gemeinsamen Bauteil der Aufwand bei der Montage der erfindungsgemäßen Fördervorrichtung reduziert.

Weiterhin besonders vorteilhaft ist die erfindungsgemäße Fördervorrichtung, wenn sich das Ansaugrohr gemeinsam mit dem Heizelement in das Filtergehäuse hinein erstreckt.

Eine derartige Anordnung ermöglicht zum einen eine besonders effiziente Aufheizung des Filtergehäuses. Das Filtergehäuse ist die Komponente in der Fördervorrichtung, die das größte mit Reduktionsmittel gefüllte Volumen aufweist. Dementsprechend ist gerade hier ein besonders großer Eintrag von Wärmeenergie notwendig, um das Reduktionsmittel aufzuschmelzen, wenn dieses eingefroren ist.

Das Ansaugrohr mit in das Filtergehäuse hineinragen zu lassen hat verschiedene Vorteile. Zum einen wird die Verbindung zwischen Gehäuse bzw. metallischer Grundplatte und Ansaugrohr mechanisch erheblich stabiler. Dadurch, dass das Ansaugrohr sich in das Filtergehäuse hinein erstreckt, können größere Biegemomente, welche beispielsweise durch Anstoßen an das Ansaugrohr während des Montageprozesses oder durch Beschleunigungsprozesse während der Fahrt des Kraftfahrzeuges wirken, vom Ansaugrohr in das Gehäuse übertragen werden.

Der Filter ist vor allem zum Schutz der darauf folgenden funktionalen Komponenten der erfindungsgemäßen Fördervorrichtung vorgesehen. Deshalb ist der Filter gegebenenfalls die erste funktionale Komponente, die entlang des Weges des Reduktionsmittels aus einem Tank hin zum Druckleitungsanschluss der Fördervorrichtung angeordnet ist. Somit ist es besonders vorteilhaft, das Ansaugrohr gerade in das Filtergehäuse hinein erstrecken zu lassen, weil so eine besonders kompakte und integrierte Bauweise der erfindungsgemäßen Fördervorrichtung ermöglicht wird.

Weiterhin besonders vorteilhaft ist die erfindungsgemäße Fördervorrichtung, wenn am Ansaugrohr ein metallischer Grobfilter für Partikel größer 30 µm [Mikrometer] ausgebildet ist.

Der Filter, der im Filtergehäuse an der metallischen Grundplatte angeordnet werden kann, ist regelmäßig zur Filterung von wesentlich kleineren Partikeln eingerichtet. Beispielsweise sollen durch den Filter Partikel mit einem Durchmesser kleiner als 10 µm (Mikrometer) und vorzugsweise Partikel mit einem Durchmesser kleiner als 3 µm (Mikrometer) abgehalten werden.

Durch einen am Ansaugrohr vorgesehenen metallischen Grobfilter kann sichergestellt werden, dass der im Gehäuse vorgesehene Filter nicht vorzeitig verstopft. So kann die Lebensdauer des Filters im Gehäuse erheblich erhöht werden, wodurch die Wartungszyklen für die erfindungsgemäße Fördervorrichtung vergrößert werden können.

Auch besonders vorteilhaft ist die erfindungsgemäße Fördervorrichtung, wenn der metallische Grobfilter ein Sieb umfasst, welches ein Ansaugende des Ansaugrohres topfförmig umgibt. Das Ansaugende ist regelmäßig das untere, dem Gehäuse der Fördervorrichtung gegenüber liegende Ende des Ansaugrohres.

Reduktionsmittel wird regelmäßig an einem Ansaugende des Ansaugrohres in das Ansaugrohr hinein angesaugt. Ein Sieb als Bestandteil des metallischen Grobfilters ist besonders kostengünstig herzustellen. Außerdem verkleinert ein geeignet dimensioniertes Sieb die Schwappbewegungen des Reduktionsmittels in einem Reduktionsmitteltank direkt um das Ansaugrohr herum. Somit kann bei geeigneter Ausgestaltung des Siebes sogar auf einen im Tank vorgesehenen Schwalltopf zur Reduktion dieser Schwappbewegung verzichtet werden. Schwappbewegungen in einem Tank in einem Kraftfahrzeug werden im Fahrbetrieb durch Beschleunigungen beim Beschleunigen, Bremsen oder bei der Kurvenfahrt ausgelöst.

Bevorzugt ist, dass auch der Grobfilter bzw. das Sieb in wärmeleitendem Kontakt zum Heizelement befestigt sind.

Auch besonders vorteilhaft ist die erfindungsgemäße Fördervorrichtung, wenn am Ansaugrohr mindestens eine Levelsensorelektrode befestigt ist, mit welcher ein Füllstand des Reduktionsmittels im Tank bestimmbar ist.

Durch eine einzelne punktförmige bzw. knopfförmige Levelsensorelektrode kann beispielsweise bestimmt werden, ob ein Reservefüllstand im Reduktionsmitteltank unterschritten wurde. Wenn zwei punktförmige, bzw. knopfförmige Levelsensorelektroden vorgesehen sind, kann zusätzlich bestimmt werden, ob ein Füllstand des Reduktionsmitteltankes vorliegt, der einem vollen Reduktionsmitteltank entspricht. Im Bereich zwischen den beiden Levelsensorelektroden kann mit Hilfe einer Software, welche die in das Abgassystem eingespritzten Mengen an Reduktionsmittel überwacht, festgestellt werden, wie der Füllstand des Systems ist. Es kann auch eine längliche Levelsensorelektrode vorgesehen sein, die stufenlos den Füllstand im Reduktionsmitteltank direkt bestimmt. Levelsensorelektroden können den Füllstand regelmäßig über die Leitfähigkeit des Reduktionsmittels bestimmen.

Eine (einzelne punktförmige bzw. knopfförmige) Levelsensorelektrode kann auch am metallischen Gehäuse der Fördervorrichtung angebracht sein. Das metallische Gehäuse ist dann zumindest teilweise innerhalb einer Tankanordnung für ein Reduktionsmittel angeordnet. Die Tankanordnung kann dabei soweit mit Reduktionsmittel befüllt sein, dass das Reduktionsmittel auch um das metallische Gehäuse herum vorliegt. Mit Hilfe einer am metallischen Gehäuse der Fördervorrichtung angebrachten Levelsensorelektrode kann auch ein derartiger Füllstand einer Tankanordnung bestimmt werden.

Auch besonders vorteilhaft ist die erfindungsgemäße Fördervorrichtung, wenn das Heizelement ein PTC-Heizelement (positive temperature coefficient) ist.

PTC-Heizelemente basieren auf einem PTC-Heizleiter. Ein derartiger Heizleiter erhöht seinen elektrischen Widerstand ab einer bestimmten Temperatur stark. Auf diese Art regelt sich ein PTC-Heizelement selbst auf eine bestimmte Heiztemperatur ein. Bevorzugt ist hier, dass genau nur ein PCT-Heizelement entlang des Ansaugrohres vorgesehen ist, welches aktiv die Fördervorrichtung bedarfsgerecht erwärmt.

Gegebenenfalls kann die benötigte Heizwirkung auch zumindest teilweise durch die Abwärme der Pumpe, des Ventils, des Filters etc. im Betrieb unterstützt werden

Auch besonders vorteilhaft ist die erfindungsgemäße Fördervorrichtung, wenn das Ansaugrohr ein inneres Leitungsrohr und ein äußeres Halterohr umfasst, wobei das Heizelement zwischen dem Leitungsrohr und dem Halterohr angeordnet ist.

Ein derartiges äußeres Halterohr um das innere Leitungsrohr und Heizelement herum erhöht zum einen die mechanische Festigkeit des vom Gehäuse abstehenden Ansaugrohres. Zum anderen kann eine zylindrische äußere Form des Ansaugrohres gewählt werden, obwohl zusätzlich zum Leitungsrohr das Heizelement mit im Ansaugrohr vorgesehen ist.

Bevorzugt sind alle Teile des Ansaugrohres aus Metall und weisen metallische Kontaktstellen zueinander auf, so dass ein effizienter Wärmeaustausch zwischen den Komponenten möglich ist und Wärme vom Heizelement leicht auf das äußere Halterohr übertragen wird. Das äußere Halterohr steht regelmäßig in Kontakt zum umgebenden Reduktionsmittel in einem Tank und kann dieses Reduktionsmittel somit aufheizen.

Darüber hinaus ist besonders vorteilhaft, wenn das Gehäuse und zumindest das Ansaugrohr oder das äußere Halterohr einstückig ausgeführt sind. In einer weiteren vorteilhaften Ausgestaltung ist das Gehäuse zusammen mit dem Ansaugrohr und dem äußeren Halterohr des Ansaugrohres einstückig ausgeführt. Vorzugsweise können das Gehäuse und das äußere Halterohr des Ansaugrohres zusammen als Tiefziehteil hergestellt werden. Es ist aber auch möglich, dass das Gehäuse und das äußere Halterohr bzw. das Ansaugrohr zunächst getrennt sind und dann in einem ersten Fertigungsschritt vorzugsweise stoffschlüssig miteinander verbunden werden, so dass zunächst ein einstückiges Bauteil entsteht, welches das Gehäuse und das äußere Halterohr umfasst und anschließend eine weitere Montage der Fördervorrichtung erfolgt. Dabei ist weiterhin bevorzugt, dass das Gehäuse einerseits und das Ansaugrohr/Halterohr andererseits verschiedene Durchmesser aufweisen.

Ganz besonders bevorzugt ist auch eine Fördervorrichtung, bei der eine Rücklaufleitung mit einem Rücklaufventil vorgesehen ist, und das Rücklaufventil als Heizung zum Aufheizen von Reduktionsmittel betreibbar ist. Nähere Erläuterungen zu dieser Ausgestaltung sind weiter unten im Zusammenhang mit einem Belüftungs- und Heizungsverfahren angegeben.

Weiterhin erfindungsgemäß ist eine Tankanordnung aufweisend einen Reduktionsmitteltank mit einer Tanköffnung sowie eine erfindungsgemäße Fördervorrichtung, wobei die Tanköffnung durch die Fördervorrichtung verschlossen ist und sich das Ansaugrohr hin zum Boden des Reduktionsmitteltankes erstreckt.

Eine Tankanordnung für ein Reduktionsmittel muss während des Betriebes verschlossen sein, damit kein Schwappen des Reduktionsmittels aus der Tankanordnung heraus erfolgen kann. Gleichzeitig sollte ein Reduktionsmitteltank eine verschließbare Öffnung ausreichender Größe haben, durch welche eine Reinigung des Tankes erfolgen kann. Weiter oben wurde bereits beschrieben, dass im Reduktionsmittel regelmäßig Partikel enthalten sind, welche zu einem Verschmutzen des Reduktionsmitteltankes führen können. Diese Öffnung des Tankes mit dem Gehäuse einer Fördervorrichtung gleichzeitig mit zu verschließen, ist technisch besonders einfach und besonders platzsparend zu realisieren.

Bevorzugt wird die Öffnung des Tanks durch das Gehäuse der Fördervorrichtung derart verschlossen, dass das Ansaugende des Ansaugrohres sich in der Nähe des Bodens des Tankes befindet und insbesondere nicht im Kontakt zum Boden des Tanks steht. Am bzw. im Tankboden kann auch eine separate Halterung zur Aufnahme des Ansaugendes vorgesehen sein, die z. B. Kräfte auf das Ansaugrohr aufnehmen, die beispielsweise durch Beschleunigungen im Betrieb eines Kraftfahrzeuges entstehen. Der Tank für das Reduktionsmittel ist bevorzugt aus Kunststoff gefertigt. Die durch das Gehäuse verschlossene Öffnung des Tankes kann einen Schraubverschluss aufweisen, wobei das Gehäuse mit einem entsprechenden Gewinde ausgeführt sein kann. Zudem kann an der Öffnung eine Dichtung vorgesehen sein, die durch das Einbringen des Gehäuses in die Öffnung zusammengedrückt wird und die Öffnung im Gehäuse so abdichtet.

Auch erfindungsgemäß ist die Tankanordnung, wenn das Gehäuse zu mehr als 50 % unterhalb der Tanköffnung angeordnet ist. Das Gehäuse der Fördervorrichtung sollte nach Möglichkeit sogar zu über 80 % und insbesondere zu annähernd 100 % unterhalb der Tanköffnung angeordnet sein.

Diese Anordnung des Gehäuses der Fördervorrichtung ermöglicht eine besonders platzsparende Anordnung von Reduktionsmitteltank und Gehäuse. Der für den Reduktionsmitteltank zur Verfügung stehende Bauraum kann vollständig durch den Reduktionsmitteltank selbst ausgefüllt sein. Für das Reduktionsmittel steht das Volumen dieses Tankes zur Verfügung und es muss lediglich das Volumen der Fördervorrichtung abgezogen werden. Bei einem vollständig gefüllten Tank kann der Tank sogar so weit befüllt werden, dass Reduktionsmittel bis um das Gehäuse herum vorliegt. Bei dieser Anordnung des Gehäuses der Fördervorrichtung im Tank ist es besonders vorteilhaft, wenn das Gehäuse mit dem Ansaugrohr zusammen wärmeleitend mit der metallischen Grundplatte verbunden ist. Ein Durchschmelzen einer im Reduktionsmitteltank vorliegenden Eisdecke ist dann auch ausgehend vom (metallischen) Gehäuse möglich. Dies ist bei Füllständen des Reduktionsmittels im Tank auf Höhe des Gehäuses zu erreichen. Besonders vorteilhaft ist, wenn das Gehäuse sowie die Tanköffnung rund sind. Der Verschluss des Reduktionsmitteltankes durch das Gehäuse sollte möglichst dicht sein. Runde, ebene Anlagenflächen zwischen Gehäuse und Tanköffnung ermöglichen regelmäßig, besonders kostengünstig eine dichte Verbindung herzustellen.

Gegebenenfalls kann die erfindungsgemäße Fördervorrichtung auch als Entnahmerohr mit zwei verschiedenen Durchmessern, in der sämtliche Komponenten zur Bereitstellung von unter Druck stehendem, flüssigen Reduktionsmittel mit integriert sind, beschrieben werden. Der Durchmesser des Ansaugrohrs stellt dabei den ersten Durchmesser des Entnahmerohrs dar, wobei für den ersten Durchmesser des Entnahmerohres hier regelmäßig der Durchmesser eines äußeren Halterohres des Ansaugrohres maßgeblich ist. Der Durchmesser des Gehäuses ist der zweite Durchmesser des Entnahmerohrs. Im größeren Durchmesser des Gehäuses lassen sich die notwendigen funktionalen Komponenten (wie Pumpe, Leitungen, Filter usw.) einfach platzieren. Ein Entnahmerohr mit zwei verschiedenen Durchmessern, in das sämtliche Komponenten zur Bereitstellung von unter Druck stehendem flüssigem Reduktionsmittel mit integriert sind, ist auch unabhängig von den bereits beschriebenen Merkmalen eine Erfindung. Diese Erfindung ist selbstverständlich mit sämtlichen hier beschriebenen bevorzugten Ausgestaltungen der erfindungsgemäßen Füllvorrichtung in beliebiger Weise kombinierbar. Für eine derartige Ausführungsvariante der erfindungsgemäßen Fördervorrichtung ist es besonders vorteilhaft, wenn das Gehäuse, gegebenenfalls zusammen mit dem Ansaugrohr und/oder dem äußeren Halterohr des Ansaugrohres, einstückig ausgeführt ist.

Auch besonders vorteilhaft ist die Tankanordnung, wenn das Ansaugrohr ein Ansaugende vorweist, welches in einer Vertiefung im Boden der Tankanordnung positioniert ist. Es ist regelmäßig besonders vorteilhaft, wenn das Ansaugen des Reduktionsmittels an der tiefsten Stelle des Tankes erfolgt, weil so der Tank nahezu vollständig entleert werden kann bzw. eine vollständige Nutzung des Tankvolumens erfolgen kann. Gleichzeitig kann eine Vertiefung im Boden des Tankes wie ein Schwalltopf wirken, der sicherstellt, dass auch bei Schwappbewegungen im Tank rund um das Ansaugende des Ansaugrohres immer Reduktionsmittel vorliegt.

Nun wird noch ein Verfahren zum Aufheizen einer erfindungsgemäßen Fördervorrichtung erläutert, wobei die Fördervorrichtung ein Rücklaufventil aufweist, das geöffnet ist, wenn dem Rücklaufventil ein Öffnungsstrom bereitgestellt wird und im geschlossenen Zustand als Heizung betrieben wird, wenn im Rücklaufventil ein Heizstrom bereitstellt wird, der kleiner ist als der Öffnungsstrom.

Dieses "passive" Zusatz-Heizverfahren kann grundsätzlich auch mit anderen Fördersystemen kombiniert werden und stellt eigenständig eine Erfindung dar.

Die erfindungsgemäße Fördervorrichtung weist regelmäßig eine Rücklaufleitung auf, die zur Entlüftung der Fördervorrichtung genutzt wird. Eine Rücklaufleitung zur Entlüftung wird beispielsweise benötigt, wenn in den Komponenten, die Reduktionsmittel beinhalten sollten, eine Luftblase ist. Insbesondere mit einer Pumpe ist eine Luftblase aufgrund der Pumpbewegung der Pumpe sehr schwer zu befördern. Dies gilt insbesondere für Membranpumpen mit passiv wirkenden Ventilen, wie sie für die erfindungsgemäße Fördervorrichtung bevorzugt sind. Das System kann über die Rücklaufleitung zunächst derart betrieben werden, dass angesaugtes Reduktionsmittel mit einem geringen Förderdruck durch das Ansaugrohr und die Rücklaufleitung zurück in den Tank im Kreis befördert wird, solange bis keine Luft mehr in der Fördervorrichtung vorliegt. Die Rücklaufleitung ist im regulären Betrieb der Fördervorrichtung, in welchem unter Druck stehendes Reduktionsmittel bereit gestellt werden soll, verschlossen, damit der in der Fördervorrichtung durch die Pumpe aufgebaute Druck nicht abgebaut wird. Für die Rücklaufleitung bzw. das Verschließen der Rücklaufleitung ist hier ein Rücklaufventil vorgesehen. Für das beschriebene Verfahren wird ein Ventil verwendet, welches geöffnet ist, wenn es von einem elektrischen Strom durchflossen wird, und geschlossen ist, wenn es von keinem elektrischen Strom durchflossen wird. Die Verwendung eines solchen Ventils ist auch deshalb bevorzugt, weil der Normalzustand der geschlossene Zustand ist, in welchem Druck in der Fördervorrichtung vorliegt und der geöffnete Zustand seltener auftritt als der geschlossene Zustand. Aus diesem Grund kann durch ein derartiges Rücklaufventil Energie eingespart werden. Es ist nun besonders vorteilhaft, wenn das Rücklaufventil auch mit einem Strom betrieben werden kann, der nicht ausreicht, um das Rücklaufventil zu öffnen. In diesem Falle wirken die elektrischen, stromführenden Wicklungen im Rücklaufventil wie eine Widerstandsheizung, durch die die Fördervorrichtung bzw. (mittelbar über die metallische Grundplatte) das in der Fördervorrichtung enthaltene, möglicherweise eingefrorene Reduktionsmittel, aufgeheizt wird. Aufgrund der wärmeleitenden Verbindung vom Rücklaufventil zur metallischen Grundplatte und somit auch zum metallischen Gehäuse und zum metallischen Ansaugrohr ist auch eine Aufheizung des Reduktionsmittels im Reduktionsmitteltank mit Hilfe eines als Heizung betriebenen Rücklaufventils möglich. Die Verwendung eines derartigen Rücklaufventils als Heizung ist auch unabhängig von den restlichen Merkmalen der erfindungsgemäßen Fördervorrichtung als Erfindung anzusehen. Gleichzeitig sind die hier vorgebrachten Erläuterungen zum Rücklaufventil und zur Rücklaufleitung auch unabhängig von dem als Heizung eingesetzten Rücklaufventil gültig und stellen mögliche Verbesserungen der erfindungsgemäßen Fördervorrichtung dar.

Auch erfindungsgemäß ist ein Kraftfahrzeug aufweisend eine Verbrennungskraftmaschine mit einem Abgassystem, welches zur Durchführung einer selektiven katalytischen Reduktion von Stickstoffoxidverbindungen eingerichtet ist, wobei das Kraftfahrzeug eine erfindungsgemäße Tankanordnung oder eine erfindungsgemäße Fördervorrichtung aufweist.

Die für die erfindungsgemäße Fördervorrichtung geschilderten Ausgestaltungen und Vorteile sind in analoger Weise auf das Kraftfahrzeug, das Verfahren zum Heizen und Belüften und die Tankanordnung übertragbar.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Weiter ist darauf hinzuweisen, dass die Figuren und insbesondere die dargestellten Größenverhältnisse nur schematisch sind. Es zeigen:
- Fig. 1:: eine dreidimensionale Darstellung der erfindungsgemäßen Fördervorrichtung,
- Fig. 2:: einen Schnitt durch eine erste Variante der erfindungsgemäßen Fördervorrichtung,
- Fig. 3:: einen weiteren Schnitt durch eine weitere erfindungsgemäße Fördervorrichtung,
- Fig. 4:: einen Schnitt durch eine weitere Ausgestaltung einer erfindungsgemäßen Fördervorrichtung,
- Fig. 5:: einen Schnitt durch noch eine weitere Ausgestaltung einer erfindungsgemäßen Fördervorrichtung und
- Fig. 6:: ein Kraftfahrzeug mit einer erfindungsgemäßen Tankanordnung aufweisend eine erfindungsgemäße Fördervorrichtung.

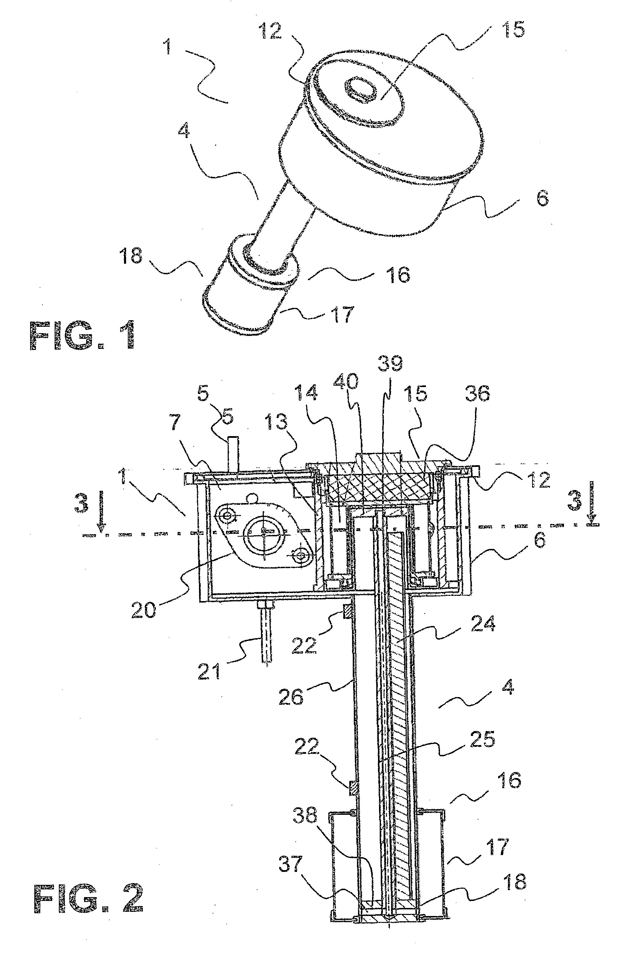

In Fig. 1 ist eine erfindungsgemäße Fördervorrichtung 1 dargestellt. Die Fördervorrichtung 1 weist ein metallisches Gehäuse 6 und ein metallisches Ansaugrohr 4 auf. An dem Ansaugende 18 des Ansaugrohres 4 ist ein Grobfilter 16 vorgesehen, welcher ein Sieb 17 aufweist. Das Gehäuse 6 weist einen Flansch 12 auf, mit welchem das Gehäuse 6 gegen einen entsprechenden Flansch beispielsweise an einer Tankordnung abgedichtet sein kann. Im Gehäuse 6 ist zudem ein Deckel 15 vorgesehen, welcher geöffnet werden und durch welchen beispielsweise eine Wartung der erfindungsgemäßen Fördervorrichtung 1 erfolgen kann. Beispielsweise kann durch den Deckel 15 ein hier nicht dargestellter Filter in der Fördervorrichtung 1 ausgetauscht werden.

Die Fig. 2 zeigt einen Schnitt durch eine erfindungsgemäße Fördervorrichtung 1. Auch hier sind das Gehäuse 6 sowie das Ansaugrohr 4 zu erkennen. In dem Gehäuse 6 ist eine metallische Grundplatte 7 vorgesehen, an der die wesentlichen Komponenten der erfindungsgemäßen Fördervorrichtung befestigt sind. Als Komponenten sind in der Fig. 2 das (metallische) Filtergehäuse 13 sowie das Rücklaufventil 20 zu erkennen. Im Filtergehäuse 13 ist auch ein Filter 14 enthalten. Durch den Deckel 15 im Gehäuse 6 ist ein Zugang direkt zum Filtergehäuse 13 möglich, so dass der Filter 14 schnell und einfach ausgetauscht werden kann. In einer vorteilhaften Ausgestaltung ist das Filtergehäuse 13 gegen das Gehäuse 6 derart abgedichtet, dass der Innenraum des Filtergehäuses 13 auch bei geöffnetem Deckel 15 gegenüber dem Innenraum des Gehäuses 6 verschlossen ist. So kann vermieden werden, dass bei einem Wechsel des Filters 14 Reduktionsmittel in dem Gehäuse 6 an Stellen gelangt, an die es nicht gelangen soll. Die Möglichkeit, den Filter 14 durch einen Deckel 15 zu wechseln, ist besonders vorteilhaft, weil der Filter 14 regelmäßig die am häufigsten zu wartende Komponente in der erfindungsgemäßen Fördervorrichtung ist.

In einer Ausführungsvariante der erfindungsgemäßen Fördervorrichtung 1 kann der Filter 14 als Filterkartusche ausgeführt sein. Die Fördervorrichtung 1 und der Filter 14 können jeweils Anschlusselemente aufweisen, die bei eingebautem Filter 14 zumindest eine fluidische Verbindung zwischen dem Filter 14 und der Fördervorrichtung 15 herstellen. Die Anschlusselemente können weiter so ausgeführt sein, dass sowohl der Filter 14 als auch die Fördervorrichtung 11 sich fluiddicht verschließen, sobald der Filter 14 aus der Fördervorrichtung 1 heraus genommen wird. So kann sichergestellt werden, dass weder aus der Fördervorrichtung 1 noch aus dem Filter 14 Reduktionsmittel austritt, wenn der Filter 14 aus der Fördervorrichtung 1 entfernt wird. Bei einer derartigen Ausgestaltung kann ein Wechsel des Filters 14 sicher und zuverlässig erfolgen.

Im Deckel 15 kann auch ein Kompensationselement 36 vorgesehen sein. Ein derartiges Kompensationselement 36 kann beispielsweise als elastisches Füllmaterial (z. B. als poröser Gummi) ausgeführt sein, um Ausdehnungen des Reduktionsmittels beim Einfrieren zu kompensieren, so dass die erfindungsgemäße Fördervorrichtung 1 durch das Einfrieren nicht geschädigt wird.

In einer vorteilhaften Ausgestaltung der erfindungsgemäßen Fördervorrichtung 1 sind sämtliche Komponenten der Filtervorrichtung 1 außer dem Filter 14 derart gestaltet und dimensioniert, dass sie während der Lebensdauer der Fördervorrichtung 1 nicht ausgewechselt werden müssen, und das Gehäuse 6 der Filtervorrichtung 1 (abgesehen vom Deckel 15) fest, dauerhaft und ohne Zerstörung nicht öffnenbar ausgeführt ist.

Auch zu sehen ist, dass das Gehäuse 6 einen Flansch 12 zum Anschluss des Gehäuses 6 beispielsweise an einen Reduktionsmitteltank aufweist. Oben am Gehäuse 6 ist ein Druckleitungsanschluss 5 vorgesehen, durch welchen unter Druck stehendes Reduktionsmittel aus der Fördervorrichtung 1 hinausgefördert werden kann. Der Druckleitungsanschluss 5 kann direkt an der metallischen Grundplatte 7 vorgesehen sein oder, wenn die metallische Grundplatte 7 als Gussteil ausgeführt ist, an diese mit angegossen sein. So kann ein sehr guter Wärmeübergang zwischen dem Druckleitungsanschluss 5 und der metallischen Grundplatte 7 erreicht werden. Der Druckleitungsanschluss 5 kann dann über die metallische Grundplatte 7 passiv (mittels Wärmeleitung) mit beheizt werden. Der Druckleitungsanschluss 5 ist vorzugsweise aus einem gut wärmeleitfähigen Werkstoff gefertigt. Bevorzugt ist der Druckleitungsanschluss 5 aus Aluminium oder Edelstahl gefertigt. Unten verlässt eine Rücklaufleitung 21 das Gehäuse 6. Durch die Rückführleitung 21 kann Reduktionsmittel aus der Fördervorrichtung 1 hinaus zurück in einen Reduktionsmitteltank gelangen, wenn das Rücklaufventil 20 geöffnet ist.

Das Ansaugrohr 4 ist aus einem inneren Leitungsrohr 25 und einem äußeren Halterohr 26 aufgebaut. Zwischen dem inneren Leitungsrohr 25 und dem Halterohr 26 ist ein (einzelnes PTC-) Heizelement 24 vorgesehen, welches sich entlang des Ansaugrohres 4 bis in das Gehäuse 6 bzw. das Filtergehäuse 13 hinein erstreckt. Am Ansaugrohr 4 sind auch Levelsensorelektroden 22 vorgesehen, mittels welcher der Füllstand an Reduktionsmittel bestimmbar ist. Am Ansaugende 18 des Ansaugrohres 4 ist auch gemäß Fig. 2 ein Grobfilter 16 aufweisend ein Sieb 17 vorgesehen.

In Verlängerung des äußeren Halterohres 26 des Ansaugrohres 4 liegt im Filtergehäuse 13 zur Aufnahme des Heizelementes 24 regelmäßig ein Filterinnengehäuse 40 vor. Die Verbindungsstelle 39 zwischen Filterinnengehäuse 40 und innerem Leitungsrohr 25 ist für die Dichtheit der erfindungsgemäßen Fördervorrichtung 1 regelmäßig sehr wichtig. Diese Verbindungsstelle 39 sollte entweder gelötet oder lasergeschweißt und/oder mit wenigstens einer O-Ring-Dichtung ausgeführt sein. Die Dichtigkeit dieser Verbindungsstelle 39 ist erforderlich, weil sonst im Betrieb Reduktionsmittel in das Gehäuse 6 der Fördervorrichtung 1 eindringen könnte. Wenn die Verbindungsstelle 39 gelötet oder lasergeschweißt ist, ist das Heizelement 24 nach Montage nicht ohne Zerstörung der Fördervorrichtung 1 zugänglich. Wenn die Verbindungsstelle 39 mit einer O-RingDichtung ausgeführt ist, kann das Heizelement 24 der Fördervorrichtung 1 ausgetauscht werden.

Das Ansaugen von Reduktionsmittel erfolgt bei der hier gezeigten Ausgestaltung der Fördervorrichtung 1 am Ansaugende 18 des Ansaugrohres 4 durch radiale Bohrungen 37. Die radialen Bohrungen 37 erstrecken sich durch das äußere Halterohr 26, dass innere Leitungsrohr 25 und einen Stopfen 28, der das äußere Halterohr 26 und das innere Leitungsrohr 25 im unteren Bereich am Ansaugende 18 miteinander verbindet und gleichzeitig den Zwischenraum zwischen äußerem Halterohr 26 und innerem Leitungsrohr 25 gegenüber der Umgebung abdichtet. Am Ansaugende 18 können mehrere radiale Bohrungen 37 vorgesehen sein. Der Stopfen 38 ist bevorzugt metallisch und mit dem inneren Leitungsrohr 25 und dem äußeren Halterohr 26 verlötet oder verschweißt.

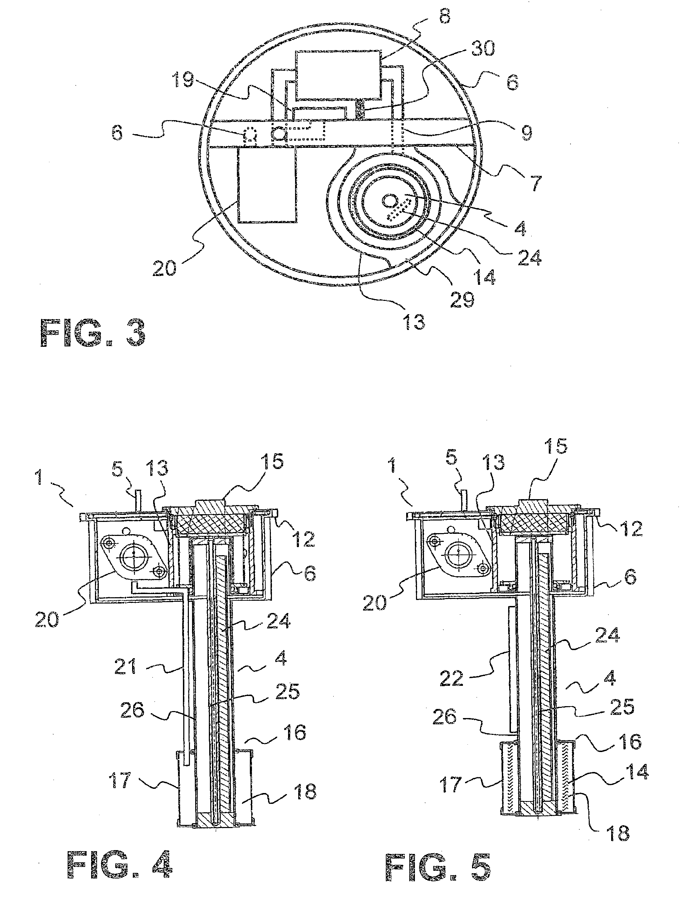

Fig. 3 zeigt einen weiteren Schnitt durch die erfindungsgemäße Fördervorrichtung 1, wobei der Schnitt durch das Gehäuse 6 so hindurchgeführt wurde, wie dies in Fig. 2 angedeutet ist. In Fig. 3 ist im Gehäuse 6 die metallische Grundplatte 7 zu erkennen, an welcher die Pumpe 8, das Rücklaufventil 20, der Drucksensor 19 sowie das Filtergehäuse 13 vorgesehen sind. In der metallischen Grundplatte 7 sind Kanäle 9 vorgesehen, durch welche fluidische Verbindungen zwischen Pumpe 8, Drucksensor 19, Filtergehäuse 13 und Rücklaufventil 20 hergestellt sind. Im Filtergehäuse 13 ist der Filter 14 angeordnet. Von oben gesehen sind innerhalb des Filtergehäuses das Ansaugrohr 4 und das Heizelement 24 zu erkennen. Die einzelnen Komponenten des Systems, wie beispielsweise das Filtergehäuse 13, das Gehäuse 6 oder das Ansaugrohr 4 stehen über Anlageflächen 29 in wärmeleitendem Kontakt. Über die Anlagefläche 29 kann auch eine Übertragung von Wärme von einer Komponente auf die eine nächste Komponente erfolgen. Wenn Komponenten des Systems konstruktionsbedingt beabstandet zueinander angeordnet sind, ist die Herstellung einer wärmeleitenden Verbindung auch über Wärmebrücken 30 möglich. Eine solche Wärmebrücke 30 ist hier beispielhaft zwischen metallischer Grundplatte 7 und Pumpe 8 dargestellt.

Die Fig. 4 und 5 zeigen Schnitte durch weitere bevorzugte Ausführungsformen der erfindungsgemäßen Fördervorrichtung 1. In beiden Figuren sind das Gehäuse 6, der Druckleitungsanschluss 5, das Filtergehäuse 13, der Deckel 15, der Flansch 12 und das Rücklaufventil 20 zu sehen. Auch erkennbar ist das Ansaugrohr 4 mit innerem Leitungsrohr 25, äußerem Halterohr 26 und Heizelement 24. Bei beiden Ausgestaltungen gemäß den Fig. 4 und 5 ist am Ansaugende 18 des Ansaugrohres 4 ein Grobfilter 16 aufweisend ein Sieb 17 vorgesehen.

Als Besonderheit weist die Ausgestaltung gemäß Fig. 4 eine Rücklaufleitung 21 auf, die in den Zwischenraum zwischen Grobfilter 16 und Ansaugrohr 4 hineinführt. Durch diese besondere Führung der Rücklaufleitung 21 kann beim Rücklauf von Reduktionsmittel durch die Rücklaufleitung 21 ein Ausspülen des Grobfilters 16 von innen heraus erfolgen. Auf diese Art und Weise kann eine besonders gute Durchlässigkeit des Grobfilters 16 auch über einen langen Betriebszeitraum der erfindungsgemäßen Fördervorrichtung 1 hinweg sichergestellt werden.

Die Ausgestaltung gemäß Fig. 5 weist als Besonderheit eine längliche Levelsensorelektrode 22 auf, durch welche der Füllstand 23 eines Reduktionsmitteltankes kontinuierlich bestimmbar ist. Des Weiteren ist bei der Ausgestaltung gemäß Fig. 5 ein Filter 14 im Zwischenraum zwischen Grobfilter 16 und Ansaugleitung 4 am Ansaugende 18 der Ansaugleitung 4 vorgesehen. Auf diese Art kann ein Filter 14 im Filtergehäuse 13 vermieden werden. Hierdurch ist das System gemäß Fig. 5 besonders kostengünstig. Wenn in einem Reduktionsmitteltank zusätzlich eine Öffnung unterhalb des Ansaugendes 10 vorhanden ist, kann ein Austausch des Filters 14 sehr einfach erfolgen, ohne dass die erfindungsgemäße Fördervorrichtung 1 über den Deckel 15 geöffnet werden muss. Die Öffnung eines Tankes nach unten hat zudem den Vorteil, dass Ablagerungen, welche sich im Tank bilden, aus dem Tank sehr einfach hinausgefördert werden.

Die verschieden Merkmale der Ausgestaltungen der erfindungsgemäßen Fördervorrichtung gemäß den Figuren 2, 4 und 5 sind in beliebiger, technisch sinnvoller Weise im Rahmen der Erfindung miteinander kombinierbar.

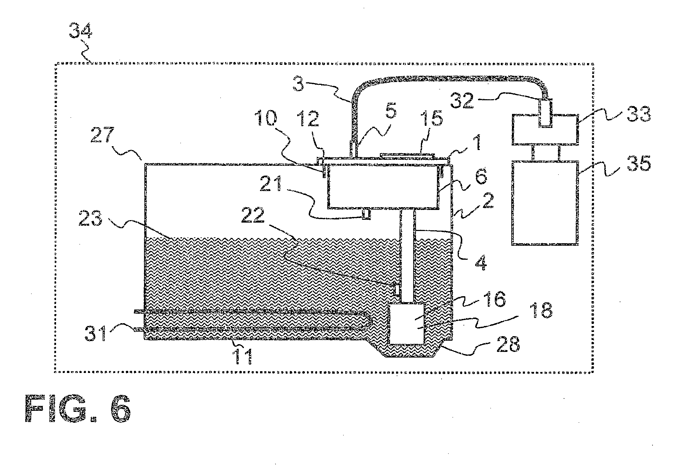

In Fig. 6 ist ein Kraftfahrzeug 34 aufweisend eine Verbrennungskraftmaschine 35 und ein Abgassystem 33 abgebildet. In das Abgassystem 33 wird über einen Injektor 32 Reduktionsmittel zugeführt. Das Abgassystem 33 ist zur Durchführung einer selektiven katalytischen Reduktion vorgesehen. Das Kraftfahrzeug 34 weist eine Tankanordnung 27 auf, in welcher eine Fördervorrichtung 1 angeordnet ist. Die Fördervorrichtung 1 verschließt eine Öffnung 10 des Reduktionsmitteltankes 2 der Tankanordnung 27, wobei ein Flansch 12 der Fördervorrichtung 1 auf einem entsprechenden Gegenflansch an der Öffnung 10 anschließt. An der Fördervorrichtung 1 sind auch in Fig. 6 der Deckel 15, das Ansaugrohr 4, der Grobfilter 16, die Rücklaufleitung 21 und das Gehäuse 6 zu erkennen. Am Ansaugrohr 4 ist zudem eine Levelsensorelektrode 22 befestigt, mit welcher ein Füllstand 23 im Reduktionsmitteltank 2 bestimmbar ist. Der Reduktionsmitteltank 2 weist einen Tankboden 11 auf, welcher im Bereich des Ansaugendes 18 der Ansaugleitung 4 eine Vertiefung 28 aufweist, so dass der Tank nahezu vollständig entleert werden kann. Im Reduktionsmitteltank 2 kann eine Tankheizung 31 vorgesehen sein, die das Reduktionsmittel im Tank zusätzlich zu der Heizung über die erfindungsgemäße Fördervorrichtung 1 aufwärmt. Eine derartige Heizung des Reduktionsmittels im Reduktionsmitteltank 2 kann beispielsweise mit Hilfe von Kühlwasser erfolgen. An den Druckleitungsanschluss 5 der Fördervorrichtung 1 schließt eine Leitung 3 an, durch welche unter Druck stehendes Reduktionsmittel von der Fördervorrichtung 1 zum Injektor 32 in das Abgassystem 33 gefördert wird.

Zwischen dem Flansch 12 der Fördervorrichtung 1 und der Öffnung 10 des Reduktionsmitteltankes 2 der Tankanordnung 27 ist regelmäßig eine doppelte O-Ring-Dichtung vorgesehen, bestehend aus zwei parallelen bevorzugt konzentrisch nebeneinander angeordneten O-Ring-Dichtungen. Eine derartige doppelte O-Ring-Dichtung vermag die Verbindung zwischen der Fördervorrichtung 1 und dem Reduktionsmitteltank 2 auch abzudichten, wenn diese unterhalb des maximalen Füllstandes 23 des Reduktionsmitteltankes 2 liegt. Der Reduktionsmitteltank 2 besteht im Bereich der Öffnung 2 regelmäßig aus Metall. Die Abdichtung mit Hilfe der O-Ring-Dichtung erfolgt folglich zwischen zwei metallischen Flächen. Metallische Flächen können regelmäßig präziser gefertigt werden als Kunststoffflächen. Demnach kann mit einer doppelten O-Ring-Dichtung hier eine entsprechend dichte Abdichtung erfolgen. Die Verbindung zwischen Fördervorrichtung 1 und Reduktionsmitteltank 2 an der Öffnung 10 erfolgt bevorzugt mittels einer SAE-Verschraubung.

Die erfindungsgemäße Fördervorrichtung und die erfindungsgemäße Tankanordnung sind besonders einfach und kostengünstig aufgebaut und ermöglichen gleichzeitig eine hohe Sicherheit und eine hohe Zuverlässigkeit bei der Bereitstellung von Reduktionsmittel. Sie stellen somit einen erheblichen Fortschritt gegenüber dem Stand der Technik dar.

### Bezugszeichenliste

- 1: Fördervorrichtung
- 2: Reduktionsmitteltank
- 3: Leitung
- 4: Ansaugrohr
- 5: Druckleitungsanschluss
- 6: Gehäuse
- 7: Grundplatte
- 8: Pumpe
- 9: Kanal
- 10: Öffnung
- 11: Boden
- 12: Flansch
- 13: Filtergehäuse
- 14: Filter
- 15: Deckel
- 16: Grobfilter
- 17: Sieb
- 18: Ansaugende
- 19: Drucksensor
- 20: Rücklaufventil
- 21: Rücklaufleitung
- 22: Levelsensorelektrode
- 23: Füllstand
- 24: Heizelement
- 25: Leitungsrohr
- 26: Halterohr
- 27: Tankanordnung
- 28: Vertiefung
- 29: Anlagefläche
- 30: Wärmebrücke
- 31: Tankheizung
- 32: Injektor
- 33: Abgassystem
- 34: Kraftfahrzeug
- 35: Verbrennungskraftmaschine
- 36: Kompensationselement
- 37: radiale Bohrung
- 38: Stopfen
- 39: Verbindungsstelle
- 40: Filterinnengehäuse

## Patentansprüche

1. Fördervorrichtung (1) für ein Reduktionsmittel mit einem Gehäuse (6), aufweisend zumindest ein außen befestigtes metallisches Ansaugrohr (4) und einen äußeren Druckleitungsanschluss (5), wobei benachbart zum Ansaugrohr (4) ein längliches Heizelement (24) angeordnet ist,
**dadurch gekennzeichnet, dass**
im Gehäuse (6), eine metallische Grundplatte (7) angeordnet ist, an der zumindest eine Pumpe (8) und Kanäle (9) vorgesehen sind, wobei das Gehäuse (6) metallisch ist und wobei das Ansaugrohr (4), das Gehäuse (6), die metallische Grundplatte (7) und die Pumpe (8) in Wärme leitendem Kontakt zueinander stehen.

2. Fördervorrichtung (1) nach Patentanspruch 1, wobei in der metallischen Grundplatte (7) Kanäle (9) eingebracht sind und das Ansaugrohr (4), die Pumpe (8) und der Leitungsanschluss (5) über die Kanäle (9) in der metallischen Grundplatte (7) fluidisch verbunden sind.

3. Fördervorrichtung (1) nach einem der vorhergehenden Patentansprüche, wobei mit der Grundplatte (7) ein metallisches Filtergehäuse (13) wärmeleitend verbunden ist, in welchem ein Filter (14) anordnenbar ist.

4. Fördervorrichtung (1) nach Patentanspruch 3, wobei das Ansaugrohr (4) sich gemeinsam mit dem Heizelement (24) in das Filtergehäuse (13) hinein erstreckt.

5. Fördervorrichtung (1) nach einem der vorhergehenden Patentansprüche, wobei am Ansaugrohr (4) ein metallischer Grobfilter (16) für Partikel größer als 30 µm ausgebildet ist.

6. Fördervorrichtung (1) nach Patentanspruch 5, wobei der metallische Grobfilter (16) ein Sieb umfasst, welches ein Ansaugende (18) des Ansaugrohres (4) topfförmig umgibt.

7. Fördervorrichtung (1) nach einem der vorhergehenden Patentansprüche, wobei am Ansaugrohr (5) mindestens eine Levelsensorelektrode (22) befestigt ist, mit welchen ein Füllstand (23) eines Reduktionsmittels im Reduktionsmitteltank (2) bestimmbar ist.

8. Fördervorrichtung (1) nach einem der vorhergehenden Patentansprüche, wobei das Heizelement (24) ein PTC-Heizelement (positive temperature coefficient) ist.

9. Fördervorrichtung (1) nach einem der vorhergehenden Patentansprüche, wobei das Ansaugrohr (4) ein inneres Leitungsrohr (25) und ein äußeres Halterohr (26) umfasst, wobei das Heizelement (24) zwischen dem Leitungsrohr (25) und dem Halterohr (26) angeordnet ist.

10. Fördervorrichtung (1) nach einem der vorhergehenden Patentansprüche, wobei das Gehäuse (6) und zumindest das Ansaugrohr (4) oder ein äußeres Halterohr (26) einstückig ausgeführt sind.

11. Fördervorrichtung (1) nach einem der vorhergehenden Patentansprüche, wobei eine Rücklaufleitung (21) mit einem Rücklaufventil (20) vorgesehen ist, und das Rücklaufventil (20) als Heizung zum Aufheizen von Reduktionsmittel betreibbar ist.

12. Tankanordnung, (27) aufweisend einen Reduktionsmitteltank (2) mit einer Tanköffnung (10) sowie eine Fördervorrichtung (1) nach einem der vorhergehenden Patentansprüche, wobei die Tanköffnung (10) durch die Fördervorrichtung (1) verschlossen ist und sich das Ansaugrohr (4) hin zum Boden (11) des Reduktionsmitteltankes (2) erstreckt.

13. Tankanordnung (27) nach Patentanspruch 12, wobei das Gehäuse (6) zu mehr als 50 % unterhalb der Tanköffnung (10) angeordnet ist.

14. Kraftfahrzeug (34), aufweisend eine Verbrennungskraftmaschine (35) mit einem Abgassystem (33), welches zur Durchführung einer selektiven katalytischen Reduktion von Stickstoffoxidverbindungen eingerichtet ist, wobei das Kraftfahrzeug (34) eine Tankanordnung (27) nach einem der Patentansprüche 12 oder 13 oder eine Fördervorrichtung (1) nach einem der Patentansprüche 1 bis 11 aufweist.

## Claims

1. Delivery device (1) for a reducing agent, having a housing (6), which has at least one metallic suction pipe (4) fastened to the outside and has an external pressure line port (5), wherein an elongate heating element (24) is arranged adjacent to the suction pipe (4),
**characterized in that**
in the housing (6) there is provided a metallic base plate (7) on which are provided at least one pump (8) and ducts (9), with the housing (6) being metallic, and wherein the suction pipe (4), the housing (6), the metallic base plate (7) and the pump (8) are in heat-conducting contact with one another.

2. Delivery device (1) as claimed in claim 1, wherein ducts (9) are formed in the metallic base plate (7), and the suction pipe (4), the pump (8) and the line port (5) are fluidically connected by means of the ducts (9) in the metallic base plate (7).

3. Delivery device (1) as claimed in one of the preceding claims, wherein a metallic filter housing (13) in which a filter (14) can be arranged is connected in heat-conducting fashion to the base plate (7).

4. Delivery device (1) as claimed in claim 3, wherein the suction pipe (4) extends together with the heating element (24) into the filter housing (13).

5. Delivery device (1) as claimed in one of the preceding claims, wherein a metallic coarse filter (16) for particles larger than 30 µm is formed on the suction pipe (4).

6. Delivery device (1) as claimed in claim 5, wherein the metallic coarse filter (16) comprises a screen which, in the manner of a pot, surrounds a suction end (18) of the suction pipe (4).

7. Delivery device (1) as claimed in one of the preceding claims, wherein there is fastened to the suction pipe (5) at least one level sensor electrode (22) by means of which a fill level (23) of a reducing agent in the reducing agent tank (2) can be determined.

8. Delivery device (1) as claimed in one of the preceding claims, wherein the heating element (24) is a PTC (positive temperature coefficient) heating element.

9. Delivery device (1) as claimed in one of the preceding claims, wherein the suction pipe (4) comprises an inner conduit pipe (25) and an outer holding pipe (26), wherein the heating element (24) is arranged between the conduit pipe (25) and the holding pipe (26).

10. Delivery device (1) as claimed in one of the preceding claims, wherein the housing (6) and at least the suction pipe (4) or an outer holding pipe (26) are formed in one piece.

11. Delivery device (1) as claimed in one of the preceding claims, wherein a return line (21) is provided which has a return valve (20), and the return valve (20) can be operated as a heater for heating reducing agent.

12. Tank arrangement (27) having a reducing agent tank (2) with a tank opening (10) and also having a delivery device (1) as claimed in one of the preceding claims, wherein the tank opening (10) is closed off by the delivery device (1) and the suction pipe (4) extends towards the bottom (11) of the reducing agent tank (2).

13. Tank arrangement (27) as claimed in claim 12, wherein more than 50% of the housing (6) is arranged below the tank opening (10).

14. Motor vehicle (34) having an internal combustion engine (35) with an exhaust system (33) designed to perform a selective catalytic reduction of nitrogen oxide compounds, wherein the motor vehicle (34) has a tank arrangement (27) as claimed in one of the claims 12 or 13 or a delivery device (1) as claimed in one of claims 1 to 11.

## Revendications

1. Dispositif d'acheminement (1) pour un agent de réduction comportant un boîtier (6), comprenant au moins un tube d'aspiration métallique (4) fixé extérieurement et un raccord extérieur de conduite de pression (5), un élément chauffant allongé (24) étant disposé à proximité du tube d'aspiration (4),
**caractérisé**
**en ce qu'**une plaque de base métallique (7) est disposée dans le boîtier (6), sur laquelle sont prévus au moins une pompe (8) et des canaux (9), le boîtier (6) étant métallique, et le tube d'aspiration (4), le boîtier (6), la plaque de base métallique (7) et la pompe (8) étant en contact de conduction de chaleur les uns avec les autres.

2. Dispositif d'acheminement (1) selon la revendication 1, dans lequel des canaux (9) sont ménagés dans la plaque de base métallique (7), et le tube d'aspiration (4), la pompe (8) et le raccord de conduite (5) sont en liaison fluidique par le biais des canaux (9) dans la plaque de base métallique (7).

3. Dispositif d'acheminement (1) selon l'une quelconque des revendications précédentes, dans lequel un boîtier de filtre métallique (13) est en liaison de conduction de chaleur avec la plaque de base (7), dans lequel boîtier de filtre peut être disposé un filtre (14).

4. Dispositif d'acheminement (1) selon la revendication 3, dans lequel le tube d'aspiration (4) s'étend conjointement avec l'élément chauffant (24) dans le boîtier de filtre (13).

5. Dispositif d'acheminement (1) selon l'une quelconque des revendications précédentes, dans lequel un filtre grossier métallique (16) pour des particules supérieures à 30 µm est réalisé sur le tube d'aspiration (4).

6. Dispositif d'acheminement (1) selon la revendication 5, dans lequel le filtre grossier métallique (16) comporte un tamis, lequel entoure à la manière d'un pot une extrémité d'aspiration (18) du tube d'aspiration (4).

7. Dispositif d'acheminement (1) selon l'une quelconque des revendications précédentes, dans lequel au moins une électrode de capteur de niveau (22) est fixée au tube d'aspiration (5), à l'aide de laquelle un niveau de remplissage (23) d'un agent de réduction dans le réservoir d'agent de réduction (2) peut être déterminé.

8. Dispositif d'acheminement (1) selon l'une quelconque des revendications précédentes, dans lequel l'élément chauffant (24) est un élément chauffant PTC (positive temperature coefficient - coefficient de température positif).

9. Dispositif d'acheminement (1) selon l'une quelconque des revendications précédentes, dans lequel le tube d'aspiration (4) comporte un tube de conduite intérieur (25) et un tube de maintien extérieur (26), l'élément chauffant (24) étant disposé entre le tube de conduite (25) et le tube de maintien (26).

10. Dispositif d'acheminement (1) selon l'une quelconque des revendications précédentes, dans lequel le boîtier (6) et au moins le tube d'aspiration (4) ou un tube de retenue extérieur (26) sont réalisés d'une seule pièce.

11. Dispositif d'acheminement (1) selon l'une quelconque des revendications précédentes, dans lequel une conduite de retour (21) pourvue d'une soupape de retour (20) est prévue, et la soupape de retour (20) peut fonctionner en tant que chauffage pour chauffer l'agent de réduction.

12. Agencement de réservoir (27) comprenant un réservoir d'agent de réduction (2) pourvu d'une ouverture de réservoir (10) ainsi qu'un dispositif d'acheminement (1) selon l'une quelconque des revendications précédentes, l'ouverture de réservoir (10) étant fermée par le dispositif d'acheminement (1) et le tube d'aspiration (4) s'étendant jusqu'au fond (11) du réservoir d'agent de réduction (2).

13. Agencement de réservoir (27) selon la revendication 12, dans lequel le boîtier (6) est disposé pour plus de 50 % en dessous de l'ouverture de réservoir (10).

14. Véhicule automobile (34), comprenant un moteur à combustion interne (35) pourvu d'un système d'échappement (33) qui est conçu pour effectuer une réduction catalytique sélective de composés d'oxyde d'azote, le véhicule automobile (34) comprenant un agencement de réservoir (27) selon la revendication 12 ou 13 ou un dispositif d'acheminement (1) selon l'une quelconque des revendications 1 à 11.
